# EUROPÄISCHE PATENTSCHRIFT

(11) **EP 2 028 388 B1**
(45) Veröffentlichungstag und Bekanntmachung des Hinweises auf die Patenterteilung: **28.07.2010**
(21) Anmeldenummer: 07114615.3
(22) Anmeldetag: 20.08.2007
(51) Int. Cl.: F16F 1/376

(54) **Gummilager**
Rubber bearing
Support en caoutchouc

(43) Veröffentlichungstag der Anmeldung: 25.02.2009
(73) Patentinhaber: Ford Global Technologies, LLC, A subsidary of Ford Motor Company, Dearborn, MI 48126 (US)
(72) Erfinder: Figura, Michael Georg, 41542 Dormagen (DE)
(74) Vertreter: Drömer, Hans-Carsten

(56) Entgegenhaltungen:
- DE-A1- 10 041 359
- GB-A- 870 910
- JP-A- 5 231 457

## Beschreibung

Die Erfindung betrifft ein Gummilager mit zumindest einem ersten Basiselement und einem dieses umgebenden Gummikörper.

Derartige Gummilager sind bekannt und werden beispielsweise in der Automobilindustrie zur Vibrationsisolierung eingesetzt, um eine Lärmentwicklung im Fahrzeuginnenraum zu reduzieren. Beispielsweise werden die Gummilager zur Vibrationsisolierung an Lenkleitungen, Klimaanlagenleitungen oder Vakuumleitungen eingesetzt, um diese beispielsweise gegen die Befestigung an einer Karosserie des Fahrzeugs zu isolieren.

Die Zusammenfassung der JP 05231457 A beschäftigt sich mit einem Vibrationsdämpfer. In einer Basisplatte sind Bohrlöcher eingebracht. Zwischen dieser und einer weiteren Basisplatte ist ein elastischer Körper angeordnet, welcher sich in einem Verbindungsprozeß mit den beiden Basisplatten verbindet. Der elastische Körper weicht dabei bereichsweise in die Bohrlöcher aus und durchgreift diese. Insofern stehen also Noppen über diese Basisplatte über, welche sich an eine Befestigungsvorrichtung anlegen können. Die Noppen sind in Umfangsrichtung gesehen zueinander beabstandet, so dass sowohl die Befestigungsvorrichtung als auch die mit den Bohrlöchern versehene Basisplatte stark unter Korrosionseinwirkung stehen.

Die DE 100 41 359 B4 befaßt sich mit einem elastischen Lager zum Abstützen eines Bauteils, zum Beispiel mit einem Stützlager eines Federbeins. Das Lager hat ein an einem Tragteil festlegbares Gehäuse, das ein Innenteil, an dem das abzustützende Bauteil befestigbar ist, und ein das Innenteil gegenüber dem Gehäuse abstützendes Dämpfungselement. Das Gehäuse ist als einteiliges, das Dämpfungselement umgebendes Spritzgußteil ausgebildet. Zwischen dem Gehäuse und dem Dämpfungselement ist zumindest ein Trennelement angeordnet, das ein Eindringen von Gehäusematerial während des Gießens des Gehäuses verhindert. Das Dämpfungselement weist eine Reihe von Ausnehmungen auf, welche durch Änderung in der Formgebung und/oder in der Anzahl die Steifigkeit des Dämpfungselementes einstellen.

Die GB 870 910 befaßt sich ebenfalls mit einem nachgebenden Lager. Ein Gummikörper nimmt ein Tragelement auf. Der Gummikörper liegt eingeschlossen in einem Gehäuse an dessen Innenseiten mit Rippen an.

Die Gummilager weisen üblicherweise eine Basisplatte auf, die in einem Gummiblock aufgenommen ist, wie beispielsweise die DE 35 24 791 A1 beschreibt, welche ein Schwingmetallpuffer offenbart. Der Schwingmetallpuffer hat einen Gummikörper mit zwei Verbindungsteilen, deren jedes mit dem Gummikörper verbunden ist. An jedem der beiden Verbindungsteile ist ein gewindefreier Bolzen zur Befestigung an zugehörigen Bauteilen vorgesehen. Die Basisplatte, welche in der DE'791 A1 als Einsatz bezeichnet wird, ist von einem Umfangsteil seitlich umgriffen.

Auch die DE 31 35 043 A1, DE 37 42 585 C1, DE 20 2004 010 409 U1, DE 1727095 U, GB 602,256 (=US2,465,790), US 3,879,024 und die US 5,845,895 befassen sich mit Gummilagern. Die DE 42 37 428 A1 (= US 5,295,671), befaßt sich mit einer Schwingungs-Isolationshalterung. Die EP 0 984 197 B1 betrifft einen Schwingungsdämpfer.

Die EP 1 526 212 A2 offenbart eine Waschmaschine. Deren Füße weisen Vibrationsabsorbierende Teile aus Gummi auf. Ein erstes Vibrationsabsorbierendes Teil kontaktiert eine Aufstandsoberfläche. Ein zweites Vibrationsabsorbierendes Teil ist bezogen auf die Aufstandoberfläche höher angeordnet als das erste Vibrationsabsorbierende Teil. Beide Vibrationsabsorbierenden Teile sind mittels einer Nut voneinander getrennt.

Möglich ist, die Gummilager in runder oder eckiger Ausgestaltung auszuführen. Zum Befestigen ist hierbei aber ein zusätzliches Werkzeug erforderlich, um das Gummilager bei einem Befestigen gegen ein Verdrehen zu sichern und so in seiner Montageposition zu halten. Denkbar ist aber auch, daß die Gummilager bzw. deren Basisplatten mit Vorrichtungen zur Erhöhung einer Reibung zu versehen, um einem Verdrehen bei einem Befestigen (üblicherweise schrauben) entgegenzuwirken. Dies kann zum Beispiel mittels einer profilierten Oberfläche der Kontaktseite der Basisplatte zu einem korrespondierenden Befestigungsbauteil geschehen. Beispielsweise könnte die Kontaktseite geriffelt sein, so daß quasi eine zahnähnliche Profilierung erzeugt ist, welche mit zunehmender Befestigungskraft in die korrespondierende Gegenseite eindringt. Hierdurch wird das entsprechende Bauteil an seiner möglicherweise mit Schutzlack versehenen Oberfläche beschädigt, so daß die Korrosionsgefahr erhöht ist. Hierdurch kann die Lebensdauer des entsprechenden Bauteils erheblich reduziert werden.

Der Erfindung liegt die Aufgabe zugrunde, ein Gummilager der Eingangs genannten Art mit einfachen Mitteln so zu verbessern, daß die vorgenannten Nachteile aufgehoben sind.

Erfindungsgemäß wird die Aufgabe durch ein Gummilager mit den Merkmalen des Anspruchs 1 gelöst. Der Gummikörper weist an seiner zur Befestigungsseite des zumindest ersten Basiselementes orientierten Anlageseite Vorsprünge auf, welche die Anlageseite in Richtung zur Befestigungsseite überragen. Zweckmäßiger Weise sind mehrere Vorsprünge vorgesehen, wobei ein in Radialrichtung gesehen innerer Vorsprung zu einem äußeren Vorsprung radial beabstandet ist.

Die Vorsprünge bilden vorteilhaft Anlagelippen, welche die Anlageseite des Gummikörpers zur Befestigungsseite des Basiselementes orientiert überragen. Bei einem Befestigen (Schrauben) des zumindest ersten Basiselementes an einem korrespondierenden Bauteil werden dabei zunächst die Vorsprünge gegen dieses gezogen, so daß die Vorsprünge durch ihre Anlage an der entsprechenden Kontaktfläche gleichzeitig den Reibungswiderstand erhöhen. Damit kann ein Verdrehen des Gummilagers aus seiner Montageposition vermieden werden, ohne daß ein zusätzliches Werkzeug notwendig wäre.

Da die Vorsprünge bei ihrem Kontakt mit der Kontaktfläche und zunehmender Befestigungskraft zusammengedrückt werden, ist erfindungsgemäß vorgesehen, daß der Gummikörper an seiner Anlageseite Expansionsräume aufweist, in welche die Vorsprünge, welche wulstartig zusammengedrückt werden ausweichen können. Die Expansionsräume sind in bevorzugter Ausführung langlochartig ausgeführt, können aber auch kreisförmig ausgeführt sein, um nur einige Beispiele zu nennen. Die Vorsprünge umgeben die Expansionsräume. Möglich ist auch, daß die Anlageseite des Gummikörpers tortenstückähnliche Expansionsräume aufweist, wobei der in Radialrichtung gesehen innere Vorsprung über Verbindungsvorsprünge mit dem äußeren Vorsprung verbunden ist. Die Verbindungsvorsprünge sind jeweils quasi als Speiche ausgeführt, und bewirken den gleichen Effekt wie der innere bzw. äußere Vorsprung.

In bevorzugter Ausführung weist der Gummikörper an seiner Anlageseite eine zentrale Ausnehmung auf, deren Innenumfang in Radialrichtung gesehen zu einer Mittelachse des Gummilagers beabstandet ist.

Denkbar ist, daß der Gummikörper eine Schlüsselfläche an seinem Außenumfang der Anlageseite aufweist. Die Schlüsselfläche ist bevorzugt als Sechskant ausgeführt, so daß ein Maulschlüssel oder eine Zange entsprechend angreifen kann.

Das zumindest eine Basiselement ist in vorteilhafter Ausgestaltung aus einer Basisplatte gebildet, welche eine sich stufenartig erhebende Klemmfläche an ihrer Befestigungsseite aufweist. Möglich ist natürlich auch, mehr als eine Stufe vorzusehen, oder daß die Klemmfläche in mehrere Teilflächen aufgeteilt sein kann. Weiter weist das Basiselement an seiner Befestigungsseite einen Gewindebolzen zur Verbindung mit einer korrespondierenden Mutter auf. Die sich stufenartige erhebende Klemmfläche ist bevorzugt im zentralen Bereich der Basisplatte vorgesehen, um einen harten Kontakt zwischen Basisplatte und korrespondierender Halterung bzw. Gegenkontaktfläche zu erreichen. Hierdurch wird vorteilhaft erreicht, daß der Gummikörper nicht zu stark komprimiert wird, und die Klemmkraft im Laufe des Fahrzeuglebens nicht durch Relaxion des Gummis sinkt, da wegen der günstigen Ausgestaltung mit der zumindest einen Stufe kein Gummi in der Klemmfuge ist.

In bevorzugter Ausgestaltung ist das Basiselement einteilig hergestellt, wobei natürlich auch eine mehrteilige Herstellung möglich ist, wobei die einzelnen Komponenten hinreichend miteinander verbunden werden können.

Zweckmäßig im Sinne der Erfindung ist vorgesehen, daß der Gummikörper in entsprechenden Gießformen um das Basiselement herum gegossen wird, so daß die

Basisplatte vollständig oder teilweise von dem Gummikörper umfaßt ist bzw. in diesem lagesicher eingebettet ist. Möglich wäre aber auch, den Gummikörper an das Basisteil, welches aus einem geeigneten Material bevorzugt aus einem Metall gebildet ist, anzuvulkanisieren. Denkbar wäre auch ein reiner Formschluß, bei dem vorteilhaft eine vulkanisierbare Materialpaarung unbeachtet bleiben könnte.

Günstiger Weise kann die Basisplatte an ihrem Außenumfang die Schlüsselfläche aufweisen, die mit umgossen wird bzw. die von dem Gummikörper umfaßt ist. Befestigungsseitig ist die Klemmfläche in Umfangsrichtung gesehen von dem Gummikörper umgeben, wobei eine freie Klemmfläche in direktem, bevorzugt metallischen Kontakt mit dem korrespondierenden Verbindungsbauteil treten kann.

Das Gummilager kann zwei identisch ausgeführte Basiselemente aufweisen, welche in der zuvor beschriebenen Art von dem Gummikörper umgeben sind, wobei der Gummikörper zwei identische, diametral gegenüber liegende Anlageseiten mit den Vorsprüngen aufweisen kann.

Die in Vibrationshinsicht voneinander zu trennenden Verbindungsbauteile können beispielhaft zum einen als Servoleitung einer Lenkung und zum anderen ein Zwischenhalter einer Karoserie oder die Karosserie selbst sein, wobei diese Beispiele natürlich nicht beschränkend sein sollen.

Die beispielhafte Servoleitung kann eine Hilfsvorrichtung beispielsweise in der Art einer Schelle mit einem dem Gewindebolzen angepaßten Loch aufweisen. Gleiches kann für das korrespondierende Verbindungsbauteil gelten. Die beiden bevorzugt einteilig hergestellten Basiselemente sind bereits im Vorfeld z. B. mit dem Gummikörper umgossen zu dem Gummilager hergestellt worden. Mittels der beiden Gewindebolzen wird das Gummilager zwischen beiden Verbindungsbauteilen zur vibrationstechnischen Trennung voneinander montiert, wobei entsprechende Muttern auf die Gewindebolzen aufgeschraubt werden. Durch das Festschrauben der Muttern gelangen zunächst die Vorsprünge in Kontakt zum korrespondieren Verbindungsbauteil, wodurch der Reibungswiderstand erhöht ist. Mit zunehmender Befestigungskraft der Muttern werden die Vorsprünge zunehmend zusammengedrückt und können mit ihren entstehenden seitlichen Wülsten in die Expansionsräume ausweichen. Die Expansionsräume können zudem vorteilhaft eine zu starke Kompression der Anlageseite des Gummikörpers vermeiden. Weiter gelangt die freie Klemmfläche in Kontakt, vorzugsweise in metallischen Kontakt mit der korrespondierenden Kontaktfläche (Klemmfuge). Die Klemmfläche fungiert günstiger Weise als Anzugshindernis, so daß der Gummikörper an seiner Anlagefläche nicht zu stark komprimiert wird. Vorteilhafter Weise kann die Klemmfläche aufgrund des erhöhten Reibungswiderstandes aufgrund der Vorsprünge ohne Profilierung ausgeführt werden, so daß eine möglicherweise vorhandene Lackschicht oder andere vor Korrosion schützende Schicht durch die Anlage der freien Klemmfläche an der korrespondierenden Kontaktfläche oder diese selbst nicht zerstört wird. Sind beide Muttern hinreichend festgedreht, sind beide Verbindungsbauteile mittels des Gummilagers zwar miteinander verbunden aber dennoch voneinander isoliert. Die Vorsprünge dienen vorteilhaft aber nicht nur zur Erhöhung des Reibungswiderstandes bei einem Befestigen, sondern wirken auch als Dichtung, so daß ein Eindringen von Wasser zwischen beide Verbindungsbauteile vermieden ist. Damit ist die Gefahr von Korrosion weiter vermindert.

Weitere vorteilhafte Ausgestaltungen sind in den Unteransprüchen und der folgenden Figurenbeschreibung offenbart. Es zeigen:
- Fig. 1: einen Querschnitt durch ein Gummilager,
- Fig. 2: eine Aufsicht auf eine Anlageseite des Gummikörpers, und
- Fig.3: eine Aufsicht auf eine Anlageseite des Gummikörpers in tortenstückähnlicher Ausgestaltung.

In den unterschiedlichen Figuren sind gleiche Teile stets mit denselben Bezugszeichen versehen, so daß diese in der Regel auch nur einmal beschrieben werden.

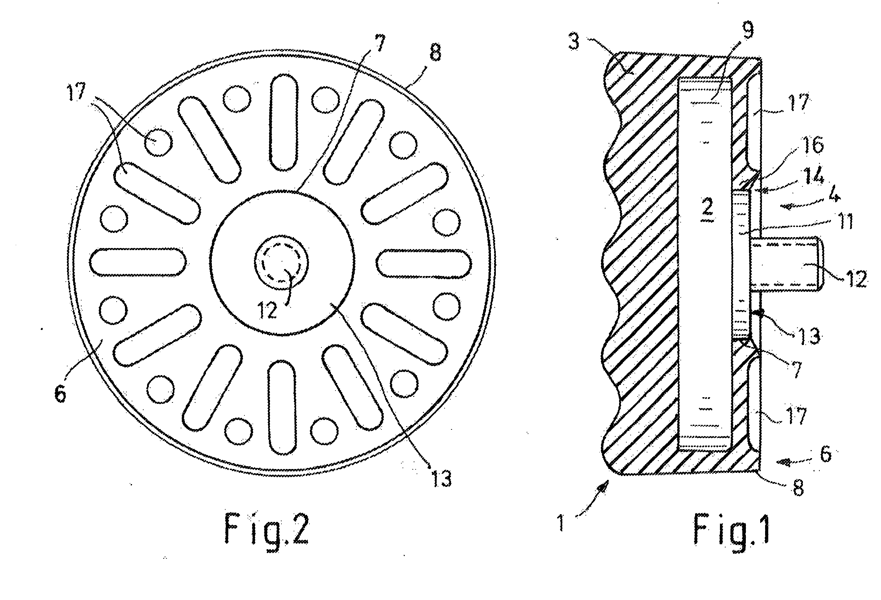

Figur 1 zeigt einen Querschnitt durch ein Gummilager 1 mit einem ersten Basiselement 2 und einem dieses umgebenden Gummikörper 3. Der Gummikörper 3 weist an seiner zu einer Befestigungsseite 4 orientierten Anlageseite 6 Vorsprünge 7 bzw. 8 auf. Ein in Radialrichtung gesehen innerer Vorsprung 7 ist zu einem äußeren Vorsprung 8 radial beabstandet (Figur 1 und 2).

Das in Figur 1 dargestellte Gummilager 1 ist eine Schnittdarstellung, dessen nicht dargestellte Seite identisch zur dargestellten ausgeführt werden kann.

Das Basiselement 2 ist als Basisplatte 9 ausgestaltet, an deren Befestigungsseite 4 sich zumindest eine stufenartige erhebende Klemmfläche 11 anschließt, der mittig ein Gewindebolzen 12 zugeordnet ist. Das Basiselement 2 ist bevorzugt einteilig hergestellt.

Der Gummikörper 3 ist um das Basiselement 2 herum gegossen, wobei die Basisplatte 9 vollständig in den Gummikörper 3 lagesicher eingebettet ist. Die sich erhebende Klemmfläche 11 ragt mit einer freien Klemmfläche 13 aus dem Gummikörper 3 bzw. seiner mittig angeordneten, zentralen Ausnehmung 14 heraus und ist lediglich umfangsmäßig an der Stufe 16 von dem Gummikörper 3 umgeben. Der Gewindebolzen 12 ist vollständig frei von Gummi. Möglich wäre aber auch, den Gummikörper 3 an das Basisteil 2, welches bevorzugt aus einem Metall gebildet ist, anzuvulkanisieren. Vorteilhaft wäre auch ein reiner Formschluß, bei dem eine vulkanisierbare Materialpaarung unbeachtet bleiben könnte.

In Figur 2 ist erkennbar, daß die Anlageseite 6 Expansionsräume 17 aufweist, in welche die Vorsprünge bei einem Zusammendrücken ausweichen können. Die Expansionsräume 17 können zum einen langlochartig und/oder kreisrund ausgeführt sein. Gleichzeitig dienen die Expansionsräume 17 dazu, eine zu starke Kompression des Gummikörpers 3 an seiner Anlageseite 6 zu vermeiden.

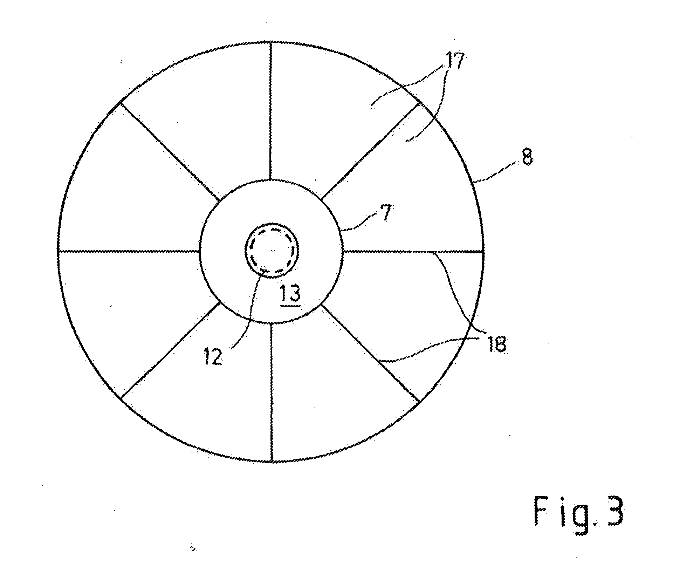

In Figur 3 ist eine bevorzugte Ausgestaltung der Anlageseite 6 natürlich nicht maßstabsgerecht dargestellt. Bei diesem Ausführungsbeispiel sind tortenstückähnliche Expansionsräume 17 vorgesehen, wobei der in Radialrichtung gesehen innere Vorsprung 7 über Verbindungsvorsprünge 18 mit dem äußeren Vorsprung 8 verbunden ist. Die Verbindungsvorsprünge 18 sind quasi als Speiche ausgeführt, und bewirken den gleichen Effekt wie der innere bzw. äußere Vorsprung 7 bzw. 8.

Der Gummikörper 3 zur Isolierung zweier Verbindungsbauteile voneinander, füllt nicht nur den Zwischenraum zwischen beiden Verbindungsbauteilen aus, sondern bettet das Basiselement 2 mit seiner Basisplatte 9 bis auf die freie Klemmfläche 14 und den Gewindebolzen 12 lagesicher ein. In bevorzugter Ausführung ist die Anlageseite 6 mit einem inneren Ring (innerer Vorsprung 7) und einem äußeren Ring (äußerer Vorsprung 8) versehen, welche nicht nur den Reibungswiderstand bei einem Befestigen erhöhen, sondern auch als Dichtlippen wirken, welche ein Eindringen von Medien, beispielsweise Wasser zu den Kontaktpartnern verhindern. Hierdurch wird die Kontaktfläche abgedichtet, so daß Korrosion vermieden ist. Beispielsweise kann das erfindungsgemäße Gummilager 1 zur vibrationstechnischen Isolierung von Servoleitungen einer Lenkung zu einer Karosserie eingesetzt werden, ohne daß dieses Ausführungsbeispiel beschränkend sein soll.

## Patentansprüche

1. Gummilager mit zumindest einem ersten Basiselement (2) und einem dieses
zumindest teilweise umgebenden Gummikörper (3),
**dadurch gekennzeichnet, daß**
der Gummikörper (3) an seiner zu einer Befestigungsseite (4) orientierten Anlageseite (6) Vorsprünge (7, 8; 18) aufweist, welche Expansionsräume (17) umgeben, wobei ein in Radialrichtung gesehen innerer Vorsprung (7) zu einem äußeren Vorsprung (8) radial beabstandet ist, und welche die Anlageseite (6) in Richtung zur Befestigungsseite (4) überragen, und wobei das Basiselement (2) eine sich stufenartig erhebende Klemmfläche (11) aufweist, welche lediglich an einer Stufe (16) von dem Gummikörper (3) so umgeben ist, dass eine freie Klemmfläche (13) aus dem Gummikörper (3) herausragt.

2. Gummilager nach Anspruch 1,
**dadurch gekennzeichnet, daß**
der Gummikörper (3) eine zentrale Ausnehmung (14) aufweist, deren Innenumfang in Radialrichtung gesehen zu einer Mittelachse beabstandet ist.

3. Gummilager nach Anspruch 1 oder 2,
**dadurch gekennzeichnet, daß**
der Gummikörper (3) bzw. das Basiselement (2) an seinem Außenumfang eine Schlüsselfläche aufweist.

4. Gummilager nach einem der vorhergehenden Ansprüche,
**dadurch gekennzeichnet, daß**
das Basiselement (2) aus einer Basisplatte (9) gebildet ist, an deren Befestigungsseite (4) sich die stufenartig erhebende Klemmfläche (11) anschließt, der mittig ein Gewindebolzen (12) zugeordnet ist.

5. Gummilager nach einem der vorhergehenden Ansprüche,
**dadurch gekennzeichnet, daß**
das Basiselement (2) einteilig hergestellt ist.

6. Gummilager nach einem der vorhergehenden Ansprüche, **dadurch gekennzeichnet, daß**
das Basiselement (2) mehrteilig hergestellt ist.

7. Gummilager nach einem der vorhergehenden Ansprüche, **dadurch gekennzeichnet, daß**
der Gummikörper (3) um das Basiselement (2) gegossen ist.

## Claims

1. Rubber mount with at least one first basic element (2) and with a rubber body (3) at least partially surrounding the latter,
**characterized in that**
the rubber body (3) has, on its bearing side (6) oriented toward a fastening side (4), projections (7, 8; 18) which surround expansion spaces (17), an inner projection (7), as seen in the radial direction, being spaced apart radially from an outer projection (8) and which projections project beyond the bearing side (6) in the direction of the fastening side (4), and the basic element (2) having a clamping face (11) which is elevated in a step-like manner, which clamping face being surrounded on only one step (16) by the rubber body in such a way, that a free clamping face (13) projects out of the rubber body (3).

2. Rubber mount according to Claim 1,
**characterized in that**
the rubber body (3) has a central recess (14), of which the inner circumference is spaced apart from a mid-axis, as seen in the radial direction.

3. Rubber mount according to Claim 1 or 2,
**characterized in that**
the rubber body (3) or the basic element (2) has a key face on its outer circumference.

4. Rubber mount according to one of the preceding claims, **characterized in that**
the basic element (2) is formed from a baseplate (9), the fastening side (4) of which has adjoining it the clamping face (11) which is elevated in a step-like manner and to which a threaded bolt (12) is assigned centrally.

5. Rubber mount according to one of the preceding claims, **characterized in that**
the basic element (2) is produced in one part.

6. Rubber mount according to one of the preceding claims, **characterized in that**
the basic element (2) is produced in a multipart fashion.

7. Rubber mount according to one of the preceding claims, **characterized in that**
the rubber body (3) is cast around the basic element (2).

## Revendications

1. Palier en caoutchouc comprenant au moins un premier élément de base (2) et un corps en caoutchouc (3) entourant celui-ci au moins en partie,
**caractérisé en ce que**
le corps en caoutchouc (3) présente, sur son côté d'appui (6) orienté vers un côté de fixation (4), des saillies (7, 8 ; 18), qui entourent des espaces d'expansion (17), une saillie interne (7), vue dans la direction radiale, étant espacée radialement d'une saillie externe (8), et qui dépassent du côté d'appui (6) dans la direction du côté de fixation (4), et l'élément de base (2) présentant une surface de serrage (11) se rehaussant de manière étagée, qui est entourée par le corps en caoutchouc (3) uniquement au niveau d'un étage (16) de telle sorte qu'une surface de serrage libre (13) ressorte hors du corps en caoutchouc (3).

2. Palier en caoutchouc selon la revendication 1, **caractérisé en ce que**
le corps en caoutchouc (3) présente un évidement central (14), dont la périphérie interne, vue dans la direction radiale, est espacée par rapport à un axe médian.

3. Palier en caoutchouc selon la revendication 1 ou 2,
**caractérisé en ce que**
le corps en caoutchouc (3) ou l'élément de base (2) présente un méplat sur sa périphérie extérieure.

4. Palier en caoutchouc selon l'une quelconque des revendications précédentes,
**caractérisé en ce que**
l'élément de base (2) est formé par une plaque de base (9), au côté de fixation (4) de laquelle se raccorde la surface de serrage (11) se rehaussant de manière étagée, qui est associée au centre à un boulon fileté (12).

5. Palier en caoutchouc selon l'une quelconque des revendications précédentes,
**caractérisé en ce que**
l'élément de base (2) est fabriqué d'une seule pièce.

6. Palier en caoutchouc selon l'une quelconque des revendications précédentes,
**caractérisé en ce que**
l'élément de base (2) est fabriqué en plusieurs parties.

7. Palier en caoutchouc selon l'une quelconque des revendications précédentes,
**caractérisé en ce que**
le corps en caoutchouc (3) est moulé autour de l'élément de base (2).
